# FASCICULE DE BREVET EUROPEEN

(11) **EP 1 319 923 B1**
(45) Date de publication et mention de la délivrance du brevet: **27.09.2006**
(21) Numéro de dépôt: 01811221.9
(22) Date de dépôt: 12.12.2001
(51) Int. Cl.: G01B 5/00, G01B 5/02, G01B 5/06

(54) **Colonne de mesure de dimensions, et procédé permettant d'introduire une commande de changement de mode de mesure dans une telle colonne**
Säule zur Messung von Dimensionen und Verfahren zum Eingeben von Steuerdaten zum automatischen Wechseln des Arbeitsmodus der Säule
Column for measuring dimensions and method of introducing a command in such a column in order to change its measuring mode

(43) Date de publication de la demande: 18.06.2003
(73) Titulaire: TESA SA, 1020 Renens (CH)
(72) Inventeur: Jordil, Pascal, 1612 Ecoteaux (CH); Rouge, Claude, 1197 Prangins (CH); Zufferey, Charles-Henri, 1976 Erde (CH)
(74) Mandataire: P&TS Patents & Technology Surveys SA

(56) Documents cités:
- EP-A- 0 780 662
- US-A- 3 895 356
- PATENT ABSTRACTS OF JAPAN vol. 015, no. 171 (M-1108), 30 avril 1991 (1991-04-30) -& JP 03 035960 A (FANUC LTD), 15 février 1991 (1991-02-15)

## Description

La présente invention concerne une colonne de mesure de dimensions, notamment une colonne à un seul axe vertical, ainsi qu'un procédé permettant d'introduire des commandes de changement de mode de mesure dans une telle colonne.

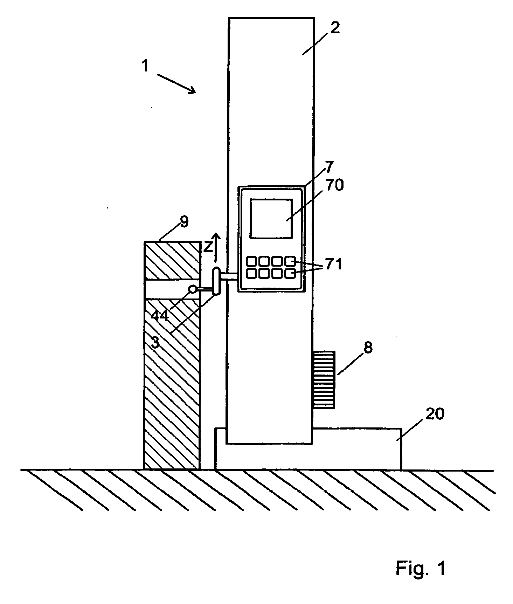

Les colonnes de mesure de dimensions verticales sont fréquemment utilisées dans des ateliers de mécanique ou dans l'industrie pour mesurer différentes coordonnées verticales d'une pièce. Un exemple de colonne de mesure 1 est représenté schématiquement sur la figure 1. La colonne représentée comporte une touche de palpage 44 montée sur un chariot de mesure 3 et mise en contact avec la pièce à mesurer 9 et un mécanisme de déplacement vertical (non représenté) permettant de déplacer cette touche de palpage selon l'axe vertical z. Le mécanisme de déplacement vertical peut être manuel ou motorisé selon le modèle. Un système de mesure et d'affichage 7 permet de déterminer la position verticale de la touche de palpage et d'afficher cette position sur un affichage 70. Le système 7 permet également de mesurer la force d'appui de la touche de palpage contre la pièce 9. Le système de mesure fait par exemple appel à un capteur capacitif, inductif, magnétorésistif ou optique comprenant par exemple une règle contre le bâti 2 et un capteur dans le chariot 3.

Les colonnes de mesure usuelles ont un bâti 2 d'une hauteur comprise entre 50 centimètres et 2 mètres et permettent de mesurer la position verticale de la touche de palpage 44 avec une précision de l'ordre du micron. La pièce à mesurer 9 est placée près de la colonne de mesure 1 et la touche de palpage est déplacée verticalement de manière à s'appuyer contre la portion de la pièce dont on souhaite mesurer la coordonnée verticale. La colonne de mesure 1 peut être montée sur un socle 20 à coussin d'air permettant de faciliter son déplacement horizontal. De telles colonnes de mesure sont décrites par exemple dans le document US4924598. De telles colonnes de mesure sont en outre commercialisées par la demanderesse sous le nom Micro-hite (marque déposée) et Tesa-hite (marque déposée) par exemple.

Les colonnes de mesure modernes sont souvent munies d'un pupitre de commande 7 comportant des boutons de commande 71 permettant d'introduire différentes commandes. Le pupitre de commande inclut un microprocesseur capable d'exécuter un programme informatique pour commander les déplacements du chariot 3, la mesure et l'affichage des résultats. Les commandes pouvant être introduites à l'aide du pupitre 7 sont interprétées par un microprocesseur qui exécute un programme informatique pour commander les déplacements du chariot 3, la mesure et l'affichage des résultats. Les commandes introduites permettent par exemple de déplacer le chariot de mesure, d'afficher la hauteur absolue d'un point, ou la différence entre deux points de mesure. D'autres commandes permettent de changer de mode de mesure ou de mode d'affichage. Différents exemples de modes de mesure utiles sont décrits dans le brevet US3895356 mentionné. Un mode de mesure utile parfois rencontré permet de mesurer des points de rebroussement, c'est-à-dire le point le plus bas et le point le plus haut d'un trou ou d'une tige et de calculer la différence de hauteur entre ces deux extrémas. Les modes d'affichage disponibles permettent par exemple de choisir entre les unités métriques ou impériales, ou d'afficher la force d'appui de la touche au lieu de sa position.

La manipulation de boutons de commande 71 sur un pupitre est peu intuitive ; le nombre de touches est important lorsque de nombreux modes de mesure et d'affichage sont disponibles. L'opérateur doit quitter de vue la pièce à mesurer pour sélectionner la touche à actionner. D'autre part, il est nécessaire de lâcher la pièce 9 ou la colonne de mesure 1 pour introduire une commande de changement de mode de mesure.

On connaît également des colonnes munies d'un bouton de commande rotatif (manivelle) 8 permettant de commander des déplacements verticaux de la touche de palpage 44. Le bouton de commande 8 peut aisément être manipulé sans devoir le regarder. Son diamètre et son emplacement sont choisis de manière à permettre une bonne prise de la colonne de mesure 1 avec une seule main sur le bouton 8. Les commandes pouvant être introduites avec ce bouton sont toutefois limitées à des déplacements verticaux du chariot de mesure.

On connaît par ailleurs des colonnes de mesure munies d'une molette (non représentée) près du bouton de commande rotatif 8 et permettant d'introduire des commandes de passage en mode de recherche du point de rebroussement. Dans ce mode, la pièce à mesurer 9 ou la colonne de mesure 1 est déplacée horizontalement, en maintenant la pression d'appui entre la touche de palpage 44 et la pièce, de manière à balayer la zone proche d'un extréma en dépassant au moins une fois le point de rebroussement. Un algorithme de calcul d'extréma détermine la coordonnée verticale du point de rebroussement; un signal acoustique et/ou optique permettant de confirmer que la coordonnée verticale du point a été calculée. L'opérateur doit ensuite actionner la molette pour désélectionner le mode de recherche automatique du point de rebroussement, puis déplacer la touche de palpage afin d'effectuer une nouvelle mesure. Ce mode de mesure est très utile pour mesurer le diamètre d'un trou ou d'une tige par exemple.

Ces systèmes ont toutefois l'inconvénient de nécessiter une molette supplémentaire qui renchérit le système et dont la manipulation est peu intuitive. Il est nécessaire de lâcher momentanément le bouton de commande rotatif 8 pour actionner la molette.

La demande de brevet européen EP0780662 décrit un bouton rotatif pour insérer une valeur en un dispositif électronique, présentant plusieurs plages angulaires, la vitesse de variation de la valeur insérée étant dépendante de la position angulaire du bouton.

Le brevet US3895356 décrit une colonne de mesure présentant plusieurs modes de mesure.

La demande de brevet JP03035960 porte sur un bouton rotatif avec un disque permettant de générer plusieurs codes.

Un but de la présente invention est de proposer un procédé permettant d'introduire les commandes de changement de mode de mesure dans une colonne de mesure de dimension verticale qui évite les inconvénients des procédés de l'art antérieur, ainsi qu'une colonne de mesure améliorée et plus facile à utiliser que les colonnes de mesure de l'art antérieur.

Selon l'invention, ces objectifs sont atteints au moyen d'un procédé et d'une colonne de mesure comportant les caractéristiques des revendications indépendantes de type correspondant, des variantes préférentielles étant en outre indiquées dans les revendications dépendantes.

Ce procédé a l'avantage que le changement de mode se fait en déplaçant le bouton de commande rotatif vers une position angulaire prédéterminée, différente des plages de positions angulaires utilisées pour déplacer verticalement la touche de palpage. Les commandes de changement de mode peuvent donc être introduites sans qu'il soit nécessaire de lâcher le bouton rotatif.

La colonne de mesure de l'invention peut fonctionner selon un nombre limité et discret de modes de mesure différents qui peuvent être sélectionnés à l'aide de l'un bouton de commande rotatif. Chaque mode de mesure peut en outre faire appel à des paramètres continus ou quasi-continus, qui dépendent par exemple de la position angulaire du bouton de commande rotatif entre deux seuils prédéterminés.

Le bouton de commande rotatif utilisé est de préférence constitué par la manivelle permettant de déplacer verticalement la touche de palpage. L'invention a donc notamment consisté à utiliser cette manivelle non seulement pour déplacer verticalement la touche de palpage, mais également pour introduire des commandes de changement de mode de mesure.

La commande de changement de mode de mesure est effectuée de préférence à chaque fois que le bouton de commande rotatif passe par une ou plusieurs positions angulaires prédéterminées. Ainsi, quelle que soit la position verticale du chariot, une commande de changement de mode de mesure peut être introduite en amenant le bouton de commande rotatif exactement dans la même position angulaire. Ce fonctionnement a l'avantage d'être très intuitif.

Dans une variante préférentielle, une réaction tactile, par exemple une modification brusque du couple de rotation, est perçue par l'opérateur lorsque le bouton de commande passe par la position prédéterminée provoquant un changement de mode. De cette manière, une commande de changement de mode de mesure peut être introduite sans quitter des yeux la pièce à mesurer ou l'écran d'affichage des résultats.

Dans une variante préférentielle, des commandes de changement de mode différentes peuvent être introduites en faisant passer le bouton de commande rotatif deux fois par la même position angulaire pendant un intervalle de temps de durée limitée. Il est possible ainsi d'augmenter le nombre de commandes différentes pouvant être introduites.

L'invention sera mieux comprise à l'aide de la description donnée à titre d'exemple et illustrée par les figures annexées parmi lesquelles:
La figure 1, déjà décrite, montre une vue schématique d'une colonne de mesure à laquelle l'invention peut être appliquée.
La figure 2 est une vue en éclaté d'un bouton de commande rotatif selon l'invention.
La figure 3 est une vue schématique des principaux éléments du bouton de commande rotatif en position de repos.
La figure 4 est une vue schématique des principaux éléments du bouton de commande rotatif dans la première position angulaire prédéterminée provoquant un changement de mode de mesure.
La figure 5 est une vue schématique des principaux éléments du bouton de commande rotatif au-delà de la première position angulaire prédéterminée.

L'invention s'applique aux colonnes de mesure à un ou plusieurs axes, manuelles ou de préférence motorisées, par exemple aux colonnes de mesure à un seul axe vertical du type illustré sur la figure 1 et décrit plus haut. La colonne de mesure 1 comprend de préférence à la fois un bouton de commande rotatif 8 et un pupitre de commande 7. Le bouton de commande rotatif 8 permet de déplacer verticalement le chariot 3 et, comme on le verra, d'introduire des commandes de changement de modes de mesure. Le pupitre de commande 7 est muni d'un affichage 70, par exemple un affichage à cristaux liquides ou à plasma, ainsi que plusieurs touches de commandes 71. Le pupitre 7 peut également comporter d'autres moyens d'introduction de données, par exemple une souris, un joystick, un microphone, etc, et d'autres moyens de restitution, par exemple un haut-parleur, une imprimante, une interface sérielle, par exemple de type RS232, infrarouge ou radio, etc. Il est également possible de connecter le pupitre 7 avec un ordinateur ou dans un réseau.

L'affichage 70 permet d'afficher le résultat de la mesure, par exemple la position verticale absolue de la touche de palpage, la différence entre deux positions, un diamètre, etc, selon le mode de mesure sélectionné. Le mode de mesure sélectionné est de préférence également affiché, par exemple à l'aide d'icônes. Il est également possible d'utiliser cet affichage pour représenter la force d'appui de la touche de palpage 44 contre la pièce à mesurer 9.

Le pupitre de commande 7 comporte en outre des touches de commandes 71, incluant par exemple des touches de fonction programmables et des touches dont la fonction est prédéfinie, par exemple une touche de marche-arrêt, une touche d'impression, etc..

Le système de mesure peut fonctionner selon plusieurs modes de mesure distincts, par exemple:
- déplacement de la touche de palpage avec affichage en continu de la position de la touche de palpage,
- déplacement automatique de la touche de palpage jusqu'à ce qu'elle entre en contact avec la pièce à mesurer, puis mesure et affichage de la coordonnée du point de contact,
- recherche du point de rebroussement pour mesurer des diamètres internes ou externes,
- mesure d'écarts de perpendicularité ou de rectitude,
- mesure selon plusieurs axes,
- mesure absolue, ou mesure de la différence par rapport à un point de mesure précédent,
- etc.

Certains modes de mesure peuvent en outre être combinés entre eux.

L'ensemble de ces modes de mesure peut de préférence être sélectionné au moyen du pupitre 7. Selon l'invention, au moins un sous-ensemble de modes de mesure fréquemment utilisés peut en outre être sélectionné de manière plus rapide et plus intuitive en agissant sur la position angulaire du bouton de commande rotatif 8.

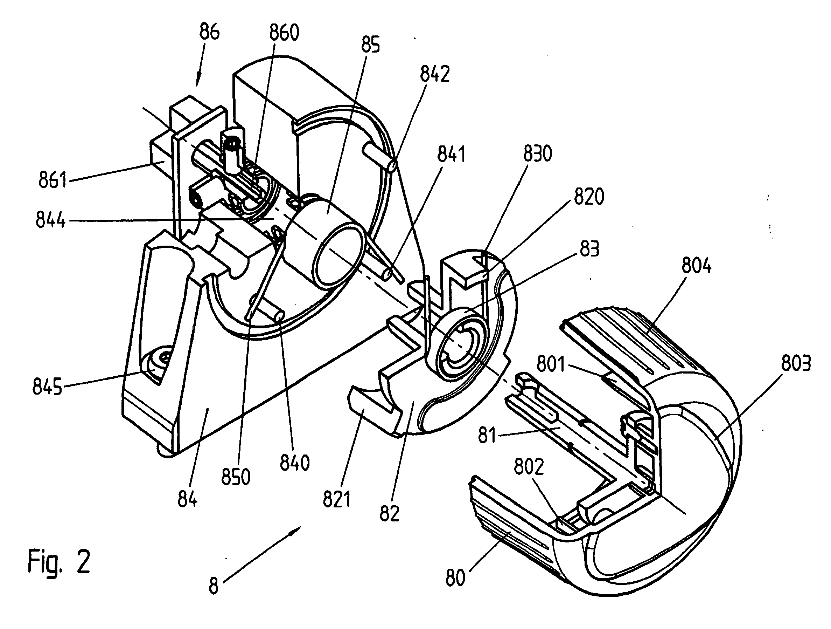

Nous allons maintenant décrire, en relation avec les figures 2 à 5, la structure et le fonctionnement du bouton de mesure rotatif 8. Ce bouton est de préférence monté sur le socle 20 ou près de la base du bâti 2. Il est ainsi possible de maintenir fermement la colonne de mesure 1 simplement en la tenant par ce bouton dont le diamètre, par exemple entre 4 et 12 centimètres, est suffisant pour remplir la paume de la main. A l'usage, une main peut donc tenir la pièce à mesurer 9 tandis que l'autre main de l'opérateur tient la colonne de mesure par ce bouton de commande 8. Il n'est pas nécessaire de lâcher la prise sur le bouton de commande pour introduire les commandes de changement de mode de mesure les plus fréquemment utilisés. Il serait toutefois aussi possible de disposer le bouton de commande rotatif ailleurs, par exemple directement sur le pupitre 7.

La variante préférentielle de bouton de commande 8 représentée comporte un volant externe 80 réalisé par exemple en matériau synthétique injecté. La surface externe du volant est munie de cannelures 804 afin d'éviter qu'il ne glisse dans la main. Un motif 803 sur la face frontale du volant 80 permet d'indiquer de manière approximative sa position angulaire. Le volant 80 est solidaire d'une tige axiale 81 traversant les autres éléments du bouton de commande et entraînée en rotation avec le volant. Dans l'exemple illustré, la tige 81 est vissée sur le volant 80 ; il serait aussi possible d'injecter ces deux éléments en une seule pièce, au prix d'un moule d'injection plus difficile à réaliser. Le volant 8 est creux et cache ainsi les autres éléments 81, 82 dans son volume interne lorsque le bouton est assemblé.

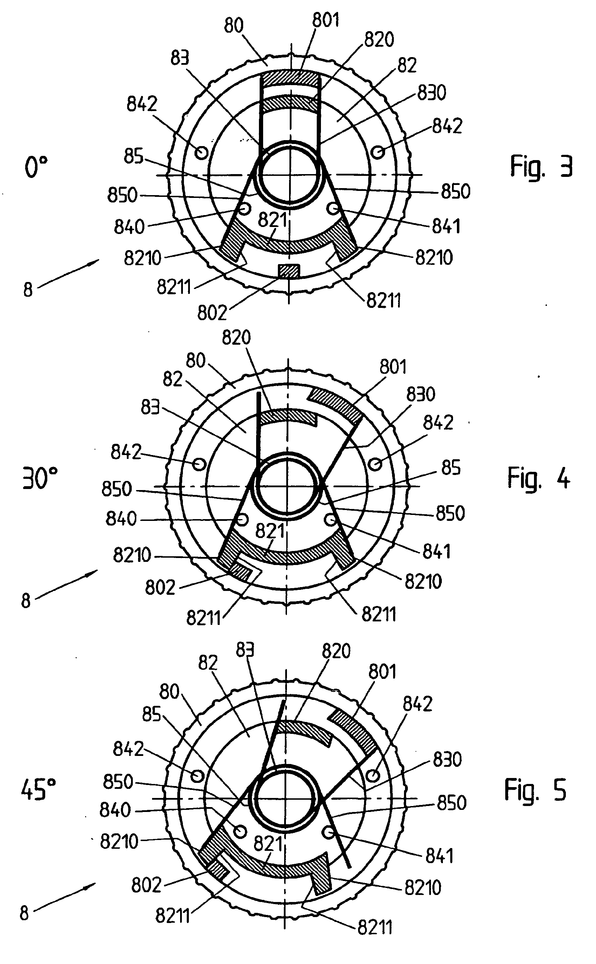

La surface latérale interne du volant 8 est munie d'une butée 801 d'entraînement du premier ressort 83, comme on le verra plus loin. La butée d'entraînement 801 est constituée par une portion angulaire en saillie couvrant un segment angulaire d'environ 20° réparti symétriquement autour du midi, c'est-à-dire du point le plus haut du volant 80 dans la position de repos illustrée sur la figure 3. Dans la suite de la description, ce point midi sera utilisé comme point de référence 0° pour indiquer la position angulaire d'autres éléments du bouton de commande 8. La surface latérale interne du volant 8 est munie d'une seconde butée 802 (visible sur les figures 3 à 5) à 180°.

Une pièce d'entraînement intermédiaire 82 constituée par un disque approximativement circulaire est enfilée autour de la tige 81 avec un jeu suffisant pour tourner librement autour de cette tige. La face de la pièce d'entraînement intermédiaire 82 tournée vers le volant 80 est munie d'une butée de retenue 820 en saillie couvrant un segment angulaire pratiquement égal à celui couvert par la butée d'entraînement 801. En position de repos, cette butée 820 est centrée à 0°.

L'autre face de la pièce d'entraînement intermédiaire 82 est munie d'une butée d'entraînement 821 en saillie. Dans l'exemple, cette butée est centrée en position de repos à 180° et possède une forme de II visible en particulier sur les figures 3 à 5. Les faces externes 8210 des jambes de la butée d'entraînement 821 permettent d'entraîner un deuxième ressort 85, comme on le verra plus loin. Les faces internes 8211 collaborent avec la seconde butée 802 pour limiter le déplacement angulaire du volant 80 par rapport à la pièce d'entraînement intermédiaire 82.

Les ressorts 83 et 85 sont tous deux constitués par un fil d'acier enroulé plusieurs fois autour de la tige centrale 81 et travaillent dans cet exemple en déroulage. Le couple nécessaire pour dérouler le deuxième ressort 85 est toutefois nettement plus important que le couple de déroulage du ressort 83. Au repos, l'écartement entre les deux brins libres 830 du premier ressort 83 est déterminé par les butées 801 et 820, qui doivent être de même longueur pour éviter tout jeu au point de repos, tandis que l'écartement entre les brins libres 850 du deuxième ressort 85 est déterminé par la butée d'entraînement 821.

Le bouton de commande rotatif 8 comporte en outre un plateau 84 fixé au socle 20 ou au bâti 2 à l'aide de vis 845. Le plateau 84 est muni d'une ouverture 844 dans laquelle la tige 81 peut pivoter librement. La face du plateau tournée vers le volant 80 et vers la pièce intermédiaire 82 comporte deux butées de retenue du deuxième ressort 85 constituées dans cet exemple par deux colonnes 840 et 841 disposées symétriquement autour du point 180°, l'écartement angulaire entre les deux colonnes 840 et 841 correspondant sensiblement au segment angulaire occupé par la butée d'entraînement 821. Le plateau 84 comporte en outre deux butées d'arrêt 842 disposées dans cet exemple environ à -45° et à +45° et destinées, comme on le verra plus loin, à limiter la rotation du deuxième ressort 85.

L'homme du métier comprendra que le bouton décrit ci-dessus et illustré sur les figures ne constitue qu'un exemple de réalisation possible, et que d'autres constructions sont imaginables pour réaliser un bouton de commande rotatif exerçant une force de réaction variant avec des seuils perceptibles.

Le bouton de commande rotatif 8 comporte enfin un potentiomètre 86 dont l'axe 860 est lié solidairement à la tige 81 et dont le corps 861 est, à l'instar du plateau 84, solidaire du socle 20 ou du bâti 2. La valeur de la résistance entre les bornes externes du potentiomètre dépend de la position angulaire de l'axe 860 et donc de la tige 81 et du volant 80. Un circuit électronique non représenté permet de convertir la valeur de cette résistance en une tension ou un courant converti en un signal numérique et transmis au pupitre 7. Un programme informatique exécuté par un microprocesseur dans ce pupitre interprète la valeur numérique de la tension/ du courant pour commander les déplacements de la touche de palpage 44 ou pour introduire des commandes de changement de mode de mesure. Le signal fourni au programme informatique dépend donc uniquement de la position angulaire du volant 80.

Nous allons maintenant décrire le fonctionnement du bouton de commande rotatif 8 à l'aide des figures 3 à 5. Sur la figure 3, le bouton de commande rotatif est en position de repos. Les butées fixes 840 et 841 empêchent un pivotement simultané des deux brins 850 du deuxième ressort 85 dans le même sens. La force anti-déroulement du deuxième ressort tend à resserrer ces deux brins 850 l'un contre l'autre, ce qui ramène la butée 821 à 180°. La pièce intermédiaire 82 se trouve donc au repos dans la position illustré sur la figure 3, avec la première butée 820 centrée à 0°. Cette butée 820 entraîne également le premier ressort 83 en position verticale ; la force anti-déroulement de ce ressort 83 ramène la butée 801 du volant du volant 80 à 0°. Au repos, lorsque aucune force externe n'est exercée sur le volant 80, celui-ci est donc ramené par l'action conjointe des deux ressorts 83 et 85 dans la position illustrée sur la figure 3 avec la butée d'entraînement 801 centrée à 0°.

Lorsque l'opérateur tourne le volant 80 par exemple dans le sens horaire illustré sur la figure 4, la butée d'entraînement 801 déplace un des brins 830 du premier ressort 83. La rotation de l'autre brin est empêchée par la butée 820 qui ne peut être pivotée qu'en agissant contre la force importante du deuxième ressort 85. La rotation du volant 80 se fait donc contre la force anti-déroulement du premier ressort 83. Dans cette première phase, la pièce intermédiaire 82 reste immobile.

La rotation relative du volant 80 et de la pièce intermédiaire 82 est bloquée dans la situation illustrée sur la figure 4 dès que la seconde butée 802 sur le volant 80 vient en appui contre les faces internes 8211 de la butée d'entraînement 821 de la pièce intermédiaire 82. A partir de ce point, comme illustré sur la figure 5, toute rotation du volant 8 ne peut se faire que contre la force du deuxième ressort 85 dont un des brins 850 est entraîné par la face externe 8210 de la butée 821, elle-même actionnée par la butée 802. Le premier ressort 83 reste dans la même position écartée. Comme la force du ressort 85 est nettement supérieure à la force du ressort 83, une nette réaction tactile est perçue par l'opérateur dès que le point illustré sur la figure 4 est dépassé. Le pupitre de commande 7 peut accompagner cette réaction en générant un signal acoustique et/ou optique lorsqu'il détecte que le volant 80 passe par la position illustrée sur la figure 4.

Les butées 842 permettent de limiter le déplacement des deuxièmes brins 850. Dès qu'un brin atteint la butée 842, tout déplacement du volant 80 dans le même sens est empêché.

Les figures 3 à 5 illustrées représentent les différents composants du bouton de commande rotatif 8 lors d'une rotation du volant de commande dans le sens horaire. On comprendra immédiatement qu'un comportement symétrique se produit lors d'une rotation dans le sens anti-horaire. Les forces de rappel dans les deux sens de rotation étant produites par les deux mêmes ressorts 83 et 85, le couple réactif exercé par le bouton 8 sur la main de l'opérateur est absolument symétrique.

Dans chaque sens de rotation, le bouton de commande rotatif 8 fonctionne donc sur deux plages successives. Dans une première plage, par exemple d'environ 30°, le couple réactif exercé par le bouton de commande est déterminé par le premier ressort 83. Dans une variante préférentielle de l'invention, le pupitre de commande 7 interprète une position du volant de commande 80 dans cette première plage comme une instruction de déplacement motorisé de la touche de palpage dont le sens est fixé par le sens de rotation du volant et dont la vitesse dépend de préférence de l'angle de rotation du volant. Le déplacement de la touche de palpage est ralenti puis s'arrête lorsque le volant 80 retourne vers la position de repos. L'affichage 80 affiche la position de la touche 44 dès qu'un palpage est détecté, c'est-à-dire lors de l'arrêt de la touche contre la pièce à mesurer 9, ou éventuellement en continu.

Lorsque le volant de commande dépasse la position prédéterminée illustrée sur la figure 4, la force réactive exercée par le bouton sur l'opérateur est déterminée par le deuxième ressort 85 et devient donc sensiblement plus importante. Le pupitre 7 interprète un passage par cette position comme une commande de changement de mode de mesure. Dans une variante préférentielle, le chariot 3 passe alors en mode de déplacement automatique et se déplace dans la direction définie par le sens de rotation du volant 80. La vitesse de déplacement automatique est déterminée par l'amplitude maximale du dépassement de la position prédéterminée. La touche de palpage 44 se déplace alors jusqu'à ce qu'elle entre en contact avec une force de contact prédéterminée avec la pièce à mesurer 9, puis effectue la mesure de point et l'affiche. La colonne de mesure 1 retourne alors en mode d'affichage continu de la position de la touche de palpage 44.

Le bouton de commande rotatif décrit utilise donc deux plages distinctes dans chaque rotation de mesure. On comprendra qu'il est possible d'utiliser plus de deux plages distinctes afin de permettre d'introduire d'autres modes de mesure à l'aide du bouton 8. Pour ce faire, il est possible d'augmenter le nombres de pièces d'entraînement intermédiaires et de ressorts lorsque l'on souhaite que chaque passage de seuil corresponde à un changement du couple réactif exercé par le bouton de commande sur la main de l'opérateur.

Il est aussi possible de prévoir d'autres types de réactions tactiles lors du passage d'un mode de mesure à un autre. Dans une variante de l'invention, on pourrait par exemple exercer une réaction localisée précisément au point de changement de mode de mesure, sans modifier le couple nécessaire pour faire pivoter le bouton de mesure au-delà de ce point. Cette réaction pourrait par exemple être provoquée par la déformation élastique d'un élément lors du passage par le point de changement de mode de mesure. Il est aussi possible de générer une réaction tactile activement, par exemple à l'aide d'un moteur agissant sur l'axe du bouton de commande rotatif.

Dans une variante préférentielle de l'invention, des commandes de changement de modes différentes peuvent être introduites en passant plusieurs fois pendant un intervalle de durée limitée par une même position angulaire prédéterminée. Il est ainsi possible d'augmenter le nombre de modes de mesure différents pouvant être sélectionnés à l'aide du bouton de commande rotatif sans augmenter le nombre de seuils distincts, rendant l'utilisation de la colonne particulièrement ergonomique. Dans une variante préférentielle de l'invention, le programme exécuté par le pupitre 7 passe en mode de recherche d'un point de rebroussement lorsque le bouton de commande passe deux fois pendant un intervalle limité, par exemple une seconde, par la position prédéterminée illustrée sur la figure 4. Ce mode permet de mesurer le point le plus haut ou le point le plus bas (selon le sens de rotation du bouton de commande 8) d'un trou ou d'une tige. La pièce à mesurer 9 ou la colonne de mesure 1 est déplacée horizontalement par l'opérateur tandis que la touche de palpage se déplace automatiquement en maintenant une pression d'appui constante entre la touche de palpage et la pièce.

Un programme exécuté par le microprocesseur dans le pupitre 7 détermine la trajectoire parcourue par la touche de palpage 44 dans ce mode. Un algorithme de calcul d'extréma détermine automatiquement la coordonnée verticale du point le plus bas ou le plus haut de cette trajectoire; une interpolation peut éventuellement être effectuée entre les deux points de mesure extrêmes les plus proches. Un signal acoustique (bip) et/ou optique est émis dès que la valeur de l'extréma a été trouvée. Afin d'obtenir une mesure plus précise, il est aussi possible de balayer plusieurs fois successivement, en sens inverse, la région autour du point de rebroussement. Dans ce cas, le point de mesure extrême est pris en compte.

Il peut arriver qu'un opérateur inexpérimenté ou distrait déplace la touche de palpage en direction du point le plus bas d'un trou, puis revienne en arrière sans atteindre ce point. Dans ce cas l'extréma sera constitué par le point de rebroussement, qui sera ici différent du point le plus bas du trou. Afin d'éviter des mesures incorrectes, la mesure du point de rebroussement sera de préférence validée uniquement si la dérivée de la position verticale de la trajectoire de la touche de palpage est proche de zéro à l'extréma.

Dès que l'extréma a été trouvé, la touche de palpage 44 est déplacée de manière à la séparer de la pièce 9 et la coordonnée du point de rebroussement calculé est affichée sur l'affichage 70.

Pour mesurer le diamètre et/ou la coordonnée du centre d'un trou, il est ensuite possible de déplacer la touche de palpage 44 contre la portion supérieure du trou et de recommencer la même opération de recherche pour trouver l'extréma supérieur du trou. Le système de mesure et d'affichage peut être programmé pour afficher soit le centre soit le diamètre du trou.

La colonne de mesure retourne alors en mode d'affichage continu ou, dans une variante, passe en mode de recherche de l'extréma suivant.

Dans les variantes illustrées ci-dessus, seule la position angulaire du bouton de commande 8 est utilisée pour introduire des commandes de changement de mode. Il serait cependant également possible d'effectuer d'autres manipulations sur ce bouton, par exemple d'appuyer dessus, pour introduire des commandes supplémentaires sans devoir lâcher prise. Il est aussi possible d'introduire des changements de mode de mesure différents en passant par la même position angulaire en appuyant sur le bouton.

On comprendra encore que les modes de mesures correspondant aux différentes plages d'utilisation du volant 8, et les changements de mode de mesure introduits en passant par des positions angulaires prédéterminées, peuvent être modifiés en agissant sur le logiciel exécuté dans le pupitre de commande 8. Des modes de mesure différents peuvent donc être définis en modifiant ce logiciel ou, sans le remplacer, en introduisant des commandes de programmation appropriées à l'aide des touches 71.

L'homme du métier comprendra enfin que l'invention décrite peut également s'appliquer à des colonnes de mesure non motorisées, dans lesquels le chariot portant la touche de palpage 44 est déplacé directement par une manivelle. La position angulaire de cette manivelle peut être mesurée pour générer des instructions de changement de mode de mesure lors du passage par certains seuils prédéterminés.

## Revendications

1. Procédé d'introduction d'une commande de changement de mode de mesure dans une colonne de mesure de dimensions (1) munie d'une touche de palpage (44) et d'un bouton de commande rotatif (8) permettant d'entraîner ladite touche de palpage dans un premier sens lorsque ledit bouton est tourné dans le sens horaire et dans le sens opposé lorsque ledit bouton est tourné dans le sens anti-horaire, la colonne de mesure de dimensions pouvant fonctionner selon plusieurs modes de mesure distincts,
**caractérisé en ce que** ladite commande de changement de mode de mesure est introduite en agissant sur la position angulaire du bouton de commande rotatif (8), et **en ce que** dans lequel ladite commande de changement de mode de mesure est introduite à chaque fois que ledit bouton de commande rotatif (8) passe par une ou plusieurs positions angulaires prédéterminées.

2. Procédé selon la revendication 1, dans lequel une réaction tactile est perçue lorsque ledit bouton de commande rotatif (8) passe par une dite position prédéterminée.

3. Procédé selon la revendication 2, dans lequel le couple nécessaire pour faire tourner ledit bouton de commande rotatif (8) varie brusquement lorsque ledit bouton de commande rotatif (8) passe par une dite position prédéterminée.

4. Procédé selon l'une des revendications 1 à 3, dans lequel un signal sonore et/ou visuel est émis lors dudit changement de mode de mesure.

5. Procédé selon l'une des revendications 1 à 4, dans lequel ledit bouton de commande rotatif (8) retourne de lui-même dans une position de repos lorsqu'il est relâché.

6. Procédé selon la revendication 5, dans lequel le couple nécessaire pour maintenir ledit bouton de commande rotatif (8) dans une position différente de ladite position de repos augmente lorsque cette position s'éloigne d'une position de repos prédéterminée.

7. Procédé selon la revendication précédente, dans lequel au moins un desdits modes de mesure consiste à déplacer ladite touche de palpage (44) à une vitesse qui dépend de la position angulaire dudit bouton de commande rotatif (8).

8. Procédé selon l'une des revendications 1 à 7, dans ladite commande de changement de mode permet de faire passer la colonne de mesure en mode de déplacement automatique de la touche de palpage lorsque le volant (80) du bouton de commande dépasse une position angulaire prédéterminée.

9. Procédé selon la revendication 8, dans lequel ladite touche de palpage (44) se déplace automatiquement dans ledit mode de déplacement automatique jusqu'à ce qu'elle entre en contact avec la pièce à mesurer (9), puis affiche la mesure du point de contact.

10. Procédé selon la revendication précédente, dans lequel la vitesse de déplacement de ladite touche de palpage (44) dans ledit mode de déplacement automatique dépend de la position angulaire atteinte par ledit bouton de commande rotatif (8).

11. Procédé selon l'une des revendications 1 à 10, dans lequel des commandes de changement de mode de mesure supplémentaires peuvent être introduites en amenant ledit bouton de commande rotatif (8) deux fois par la même position angulaire prédéterminée pendant un intervalle de durée prédéterminée.

12. Procédé selon l'une des revendications 1 à 11, dans lequel une commande de changement de mode introduite par ledit bouton de commande rotatif (8) permet de faire passer ladite colonne de mesure (1) dans un mode de recherche d'un point de rebroussement de la pièce à mesurer (9).

13. Procédé selon l'une des revendications 1 à 12, dans lequel la position angulaire dudit bouton de commande rotatif (8) est déterminée à l'aide d'un potentiomètre (86), un circuit électrique permettant de déterminer la résistance dudit potentiomètre (86), un programme informatique permettant d'exécuter ladite commande de changement de mode en fonction du signal fourni par ledit circuit électrique.

14. Procédé selon l'une des revendications 1 à 13, dans lequel le mode de mesure déterminé en agissant sur ledit bouton de commande rotatif est programmé.

15. Colonne de mesure de dimensions (1), comprenant:
une touche (44) de palpage destinée à être mise en contact avec la pièce à mesurer (9),
un dispositif d'entraînement de ladite touche de palpage
un pupitre (7) pour afficher la position de ladite touche de palpage et pour commander ledit dispositif d'entraînement,
un bouton de commande rotatif (8) permettant d'entraîner ladite touche de palpage dans un premier sens lorsque ledit bouton est tourné dans le sens horaire et dans le sens opposé lorsque ledit bouton est tourné dans le sens anti-horaire, la colonne de mesure (1) pouvant fonctionner selon plusieurs modes de mesure distincts,
**caractérisée en ce que** ledit bouton de commande rotatif (8) permet d'introduire des commandes supplémentaires de changement de mode de mesure en le faisant pivoter au-delà d'au moins un seuil prédéterminé.

16. Colonne de mesure de dimensions selon la revendication 15, dans laquelle ledit pupitre (7) est muni de plusieurs touches (71), des commandes de changement de modes pouvant être introduites soit en agissant sur la position angulaire dudit bouton de commande rotatif (8), soit en agissant sur lesdites touches (71) dudit pupitre (7).

17. Colonne de mesure de dimensions selon l'une des revendications 15 ou 16, dans laquelle une réaction tactile est exercée par ledit bouton de commande rotatif sur l'opérateur à chaque fois que ledit bouton de commande rotatif (8) passe par un dit seuil prédéterminé.

18. Colonne de mesure de dimensions selon la revendication 17, dans laquelle le couple nécessaire pour pivoter ledit bouton de commande rotatif (8) varie brusquement dès ledit bouton de commande rotatif (8) passe par un dit seuil prédéterminé.

19. Colonne de mesure de dimensions selon l'une des revendications 15 à 18, dans laquelle un signal sonore et/ou visuel est émis lors dudit changement de mode de mesure.

20. Colonne de mesure selon l'une des revendications 15 à 19, dans laquelle ledit bouton de commande rotatif (8) comporte au moins un ressort (83, 85) pour ramener ledit bouton de commande rotatif (8) dans une position de repos prédéterminée.

21. Colonne de mesure selon la revendication 20, dans laquelle ledit bouton de commande rotatif (8) comporte au moins deux ressorts (83, 85) pour ramener ledit bouton de commande rotatif dans une position de repos prédéterminée avec un premier couple lorsque la position angulaire dudit bouton de commande se trouve dans un premier intervalle autour de ladite position de repos et avec un deuxième couple plus important lorsque la position angulaire dudit bouton de commande se trouve dans un deuxième intervalle autour de ladite position de repos.

22. Colonne de mesure selon la revendication 21, dans laquelle ledit bouton de mesure rotatif (8) comporte un volant (80) destiné à être saisi par l'opérateur, une pièce d'entraînement intermédiaire (82), un premier ressort (83) pour ramener ledit volant (80) dans une position prédéterminée par rapport à ladite pièce d'entraînement intermédiaire (82), et un deuxième ressort (85) pour ramener ladite pièce d'entraînement intermédiaire (82) dans une position de repos par rapport à ladite colonne de,mesure (1), les couples desdits ressorts étant différents l'un de l'autre.

23. Colonne de mesure selon l'une des revendications 20 à 22, dans laquelle ledit au moins un ressort (83, 85) permet de ramener ledit bouton de commande rotatif (8) dans ladite position de repos quelle que soit le sens dans lequel il a pivoté.

24. Colonne de mesure selon l'une des revendications 15 à 23, dans laquelle la position angulaire dudit bouton de commande rotatif (8) entre lesdits seuils prédéterminés détermine la vitesse de déplacement de ladite touche de palpage (44).

25. Colonne de mesure de dimensions (1) selon l'une des revendications 15 à 24, **caractérisée en ce que** ledit bouton de commande rotatif (8) permet de faire passer la colonne de mesure en mode de déplacement automatique de la touche de palpage lorsque le volant (80) du bouton de commande dépasse une position angulaire prédéterminée.

26. Colonne de mesure selon la revendication 25, dans laquelle ladite touche de palpage (44) se déplace automatiquement dans ledit mode de déplacement automatique jusqu'à ce qu'elle entre en contact avec la pièce à mesurer (9), puis affiche la mesure correspondant du point de contact.

27. Colonne de mesure selon la revendication 26, dans lequel la vitesse de déplacement de ladite touche de palpage dans ledit mode de déplacement automatique dépend de la position angulaire atteinte par ledit bouton de commande rotatif.

28. Colonne de mesure selon l'une des revendications 25 à 27, dans laquelle le sens du déplacement automatique dépend de la position angulaire dudit bouton de commande rotatif par rapport à ladite position de repos.

29. Colonne de mesure selon l'une des revendications 15 à 28, dans laquelle ladite commande de changement de mode permet de faire passer ladite colonne dans un mode de recherche d'un point de rebroussement de la pièce à mesurer.

30. Colonne de mesure selon l'une des revendications 15 à 29, une commande de changement de mode différente étant introduite lorsque ledit bouton de commande rotatif (8) passe deux fois par le même seuil pendant un intervalle de durée prédéterminé.

31. Colonne de mesure selon la revendication 30, dans laquelle ladite commande de changement de mode permet de faire passer ladite colonne (1) dans un mode de recherche d'un point de rebroussement de la pièce à mesurer (9) lorsque ledit bouton de commande rotatif (8) passe deux fois par le même seuil pendant un intervalle de durée prédéterminé.

32. Colonne de mesure selon l'une des revendications 15 à 31, le mode de mesure sélectionné en passant par un desdits seuils prédéterminés étant déterminé par un programme informatique.

33. Colonne de mesure selon l'une des revendications 15 à 32, comportant un potentiomètre (86) et un circuit électrique pour déterminer la position angulaire dudit bouton de commande rotatif (8), un programme informatique permettant d'exécuter ladite commande de changement de mode en fonction du signal fourni par ledit circuit électrique.

## Claims

1. Method for entering a command to switch the measure mode in a dimension-measuring column (1) provided with a probe tip (44) and with a turning button (8) allowing said probe tip to be driven in a first direction when said button is turned clockwise and in the opposite direction when said button is turned counter-clockwise, the dimension-measuring column being capable of operating according to several distinct measure modes,
**characterized in that** said command to switch the measure mode is entered by acting on the angular position of the turning control button (8) and **in that** said command to switch the measure mode is entered each time said turning control button (8) passes through one or several predetermined angular positions.

2. Method according to claim 1, wherein a tactile reaction is perceived when said turning control button (8) passes through one of said predetermined positions.

3. Method according to claim 2, wherein the torque necessary for turning said turning control button (8) varies suddenly when said turning control button (8) passes through one of said predetermined positions.

4. Method according to one of the claims 1 to 3, wherein a sound and/or optical signal is emitted when the measure mode is switched.

5. Method according to one of the claims 1 to 4, wherein said turning control button (8) automatically returns in a resting position when it is released.

6. Method according to claim 5, wherein the torque necessary for maintaining said turning control button (8) in a position different from said resting position increases when this position moves away from a predetermined resting position.

7. Method according to the preceding claim, wherein at least one of said measure modes consists in displacing said probe tip (44) at a speed depending on the angular position of said turning control button (8).

8. Method according to one of the claims 1 to 7, wherein said mode-switch command allows said measuring column (1) to switch to an automatic displacement mode of the probe tip (44) when the crank (80) of the control button overshoots a predetermined angular position.

9. Method according to claim 8, wherein said probe tip (44) is displaced automatically in said automatic displacement mode until it comes into contact with the piece to be measured (9), then displays the measurement of the contact point.

10. Method according to the preceding claim, wherein the displacement speed of said probe tip (44) in said automatic displacement mode depends on the angular position reached by said turning control button (8).

11. Method according to one of the claims 1 to 10, wherein additional commands to switch the measure mode can be entered by having said turning control button (8) pass twice through the same predetermined angular position during an interval of predetermined duration.

12. Method according to one of the claims 1 to 11, wherein a mode-switch command entered by said turning control button (8) allows said measuring column (1) to switch to a search mode of a turn-back point of a piece to be measured (9).

13. Method according to one of the claims 1 to 12, wherein the angular position of said turning control button (8) is determined by means of a potentiometer (86), an electric circuit enabling the resistance of said potentiometer (86) to be determined, a computer program enabling said mode-switch command to be executed according to the signal supplied by said electric circuit.

14. Method according to one of the claims 1 to 13, wherein the measure mode determined by acting on said turning control button is programmed.

15. Dimension-measuring column (1), comprising:
a probe tip (44) designed for being brought into contact with the piece to be measured (9),
a device for driving said probe tip,
a control panel (7) for displaying the position of said probe tip and for controlling said driving device,
a turning control button (8) for driving said probe tip in a first direction when said button is turned clockwise and in the opposite direction when said button is turned counter-clockwise, the dimension-measuring column being capable of operating according to several distinct measure modes
**characterized in that** said turning control button (8) enables additional commands to switch the measure mode to be entered by making it pivot beyond at least one predetermined threshold.

16. Dimension-measuring column according to claim 15, wherein said control panel (7) is provided with several keys (71), whereas mode-switch commands can be entered either by acting on the angular position of said turning control button (8) or by acting on said keys (71) of said control panel (7).

17. Dimension-measuring column according to one of the claims 15 or 16, wherein a tactile reaction is exerted by said turning control button on the operator each time said turning control button (8) passe through one of said predetermined thresholds.

18. Dimension-measuring column according to claim 17, wherein the torque necessary for pivoting said turning control button (8) varies suddenly when said turning control button (8) passes through one of said predetermined thresholds.

19. Dimension-measuring column according to one of the claims 15 to 18, wherein a sound and/or optical signal is emitted when the measure mode is switched.

20. Measuring column according to one of the claims 15 to 19, wherein said turning control button (8) comprises at least one spring (83, 85) for bringing said turning control button (8) back in a predetermining resting position.

21. Measuring column according to claim 20, wherein said turning control button (8) comprises at least two springs (83, 85) for bringing said turning control button in a predetermined resting position with a first torque when the angular position of said control button is situated in a first interval around said resting position, and with a second, greater torque when the angular position of said control button is situated in a second interval around said resting position.

22. Measuring column according to claim 21, wherein said turning measuring button (8) comprises a crank (80) designed to be grasped by the operator, an intermediate driving piece (82), a first spring (83) for bringing back said crank (80) in a predetermined position relative to said intermediate driving piece (82), and a second spring (85) for bringing back said intermediate driving piece (82) in a resting position relative to said measuring column (1), the torque of said springs being different from one another.

23. Measuring column according to claim 22, wherein said at least one spring (83, 85) enables said turning control button (8) to be brought back in said resting position whatever the direction in which it has pivoted.

24. Measuring column according to one of the claims 15 to 23, wherein the angular position of said turning control button (8) between said predetermined thresholds determines the displacement speed of said probe tip (44).

25. Dimension-measuring column (1) according to one of the claims 15 to 24, **characterized in that** said turning control button (8) allows said measuring column to switch to an automatic displacement mode of the probe tip (44) when the crank (80) of the control button overshoots a predetermined angular position.

26. Measuring column according to claim 25, wherein said probe tip (44) is displaced automatically in said automatic displacement mode until it comes into contact with the piece to be measured (9), then displays the measurement corresponding to the contact point.

27. Measuring column according to claim 26, wherein the displacement speed of said probe tip in said automatic displacement mode depends on the angular position reached by said turning control button.

28. Measuring column according to one of the claims 25 to 27, wherein the direction of automatic displacement depends on the angular position of said turning control button relative to said resting position.

29. Measuring column according to one of the claims 15 to 28, wherein said mode-switch command allows said column to switch to a search mode of a turn-back point of a piece to be measured.

30. Measuring column according to one of the claims 15 to 28, a different mode-switch commands being entered when said turning control button (8) passes twice through the same threshold during an interval of predetermined duration.

31. Measuring column according to claim 30, wherein said mode-switch command allows said column (1) to switch to a search mode of a turn-back point of the piece to be measured (9) when said turning control button (8) passes twice through the same threshold during an interval of predetermined duration.

32. Measuring column according to one of the claims 15 to 31, the measure mode selected by passing through one of said predetermined thresholds being determined by a computer program.

33. Measuring column according to one of the claims 15 to 32, comprising a potentiometer (86) and an electric circuit for determining the angular position of said turning control button (8), a computer program enabling said mode-switch command to be executed according to the signal supplied by said electric circuit.

## Patentansprüche

1. Verfahren zum Eingeben eines Messmoduswechselbefehls in einer Säule zur Messung von Dimensionen (1) mit einem Taster (44) und einem Steuerungsdrehknopf (8) der erlaubt, den Taster in eine erste Richtung anzutreiben, wenn der besagte Knopf im Uhrzeigersinn gedreht wird und in die entgegen gesetzte Richtung, wenn der besagte Knopf im Gegenuhrzeigersinn gedreht wird, wobei die Säule zur Messung von Dimensionen gemäss mehreren unterschiedlichen Messmodi funktionieren kann,
**dadurch gekennzeichnet, dass** der besagte Messmoduswechselbefehl eingegeben wird, indem auf die Winkelposition des Steuerungsdrehknopfs (8) gewirkt wird, und dass der besagte Messmoduswechselbefehl jedes Mal eingegeben wird, wenn der besagte Steuerungsdrehknopf (8) eine oder mehrere vorbestimmte Winkelpositionen durchläuft.

2. Verfahren gemäss Anspruch 1, worin eine Tastreaktion gespürt wird, wenn der besagte Steuerungsdrehknopf (8) eine besagte vorbestimmte Position durchläuft.

3. Verfahren gemäss Anspruch 2, worin das zum Drehen des besagten Steuerungsdrehknopfs (8) benötigte Moment plötzlich variiert, wenn der besagte Steuerungsdrehknopf (8) eine besagte vorbestimmte Position durchläuft.

4. Verfahren gemäss einem der Ansprüche 1 bis 3, worin ein akustisches und/oder visuelles Signal beim besagten Messmoduswechsel gesendet wird.

5. Verfahren gemäss einem der Ansprüche 1 bis 4, worin der besagte Steuerungsdrehknopf (8) von selbst in eine Ruheposition zurückkehrt, wenn er freigelassen wird.

6. Verfahren gemäss Anspruch 5, worin das Moment, das zum Halten des besagten Steuerungsdrehknopfs (8) in einer anderen Position als in der besagten Ruheposition benötigt wird, steigt, wenn diese Position sich von einer vorbestimmten Ruheposition entfernt.

7. Verfahren gemäss dem vorhergehenden Anspruch, worin mindestens einer der besagten Messmodi darin besteht, den besagten Taster (44) zu verschieben mit einer Geschwindigkeit, die von der Winkelposition des besagten Steuerungsdrehknopfs (8) abhängt.

8. Verfahren gemäss einem der Ansprüche 1 bis 7, worin der besagte Moduswechselbefehl erlaubt, die Messsäule in einen Modus der automatischen Verschiebung des Tasters zu versetzen, wenn das Rad (80) des Befehlknopfs eine vorbestimmte Winkelposition überschreitet.

9. Verfahren gemäss Anspruch 8, worin der Taster (44) sich im automatischen Verschiebungsmodus automatisch verschiebt, bis er mit dem zu messenden Stück (9) in Kontakt kommt, und dann die Messung des Kontaktpunkts anzeigt.

10. Verfahren gemäss dem vorhergehenden Anspruch, worin die Verschiebungsgeschwindigkeit des besagten Tasters (44) im besagten automatischen Verschiebungsmodus von der Winkelposition abhängt, die vom besagten Steuerungsdrehknopf (8) erreicht wird.

11. Verfahren gemäss einem der Ansprüche 1 bis 10, worin zusätzliche Messmoduswechselbefehle eingegeben werden können, indem der besagte Steuerungsdrehknopf (8) zwei Mal durch die gleiche vorbestimmte Winkelposition während einer Zeitspanne vorbestimmter Dauer geführt wird.

12. Verfahren gemäss einem der Ansprüche 1 bis 11, worin ein durch den besagten Steuerungsdrehknopf (8) eingegebener Moduswechselbefehl erlaubt, die besagte Messsäule in einen Suchmodus des Wendepunkts des zu messenden Stücks (9) zu versetzen.

13. Verfahren gemäss einem der Ansprüche 1 bis 12, worin die Winkelposition des besagten Steuerungsdrehknopfs (8) mittels eines Potentiometers (86) bestimmt wird, wobei eine elektrische Schaltung den Widerstand des besagten Potentiometers (86) zu bestimmen erlaubt, wobei ein Computerprogramm die Ausführung des besagten Moduswechselbefehls gemäss dem von der besagten elektrischen Schaltung gelieferten Signal erlaubt.

14. Verfahren gemäss einem der Ansprüche 1 bis 13, worin der durch Wirkung auf den besagten Steuerungsdrehknopf bestimmte Messmodus programmiert wird.

15. Säule zur Messung von Dimensionen (1), mit:
einem Taster (44), dazu bestimmt, in Kontakt mit dem zu messenden Stück (9) gesetzt zu werden,
einer Antriebsvorrichtung des besagten Tasters,
einer Konsole (7) zum Anzeigen der Position des besagten Tasters und zum Steuern der besagten Antriebsvorrichtung,
einem Steuerungsdrehknopf (8) der erlaubt, den Taster in eine erste Richtung anzutreiben, wenn der besagte Knopf im Uhrzeigersinn gedreht wird und in die entgegen gesetzte Richtung, wenn der besagte Knopf im Gegenuhrzeigersinn gedreht wird, wobei die Säule zur Messung von Dimensionen (1) gemäss mehreren unterschiedlichen Messmodi funktionieren kann,
**dadurch gekennzeichnet, dass** der besagte Steuerungsdrehknopf (8) das Eingeben von zusätzlichen Messmoduswechselbefehlen erlaubt, indem er über eine vorbestimmte Schwelle hinaus geschwenkt wird.

16. Säule zur Messung von Dimensionen gemäss Anspruch 15, worin die besagte Konsole (7) mit mehreren Tasten (71) versehen ist, wobei Moduswechselbefehle eingegeben werden können, entweder indem auf die Winkelposition des besagten Steuerungsdrehknopfs (8) gewirkt wird, oder indem die besagten Tasten (71) der besagten Konsole (7) betätigt werden.

17. Säule zur Messung von Dimensionen gemäss einem der Ansprüche 15 oder 16, worin eine Tastreaktion vom besagten Steuerungsdrehknopf (8) auf die Bedienungsperson jedes Mal ausgeübt wird, wenn der besagte Steuerungsdrehknopf (8) eine besagte vorbestimmte Schwelle durchläuft.

18. Säule zur Messung von Dimensionen gemäss Anspruch 17, worin das zum Schwenken des besagten Steuerungsdrehknopfs (8) benötigte Moment plötzlich variiert, wenn der besagte Steuerungsdrehknopf (8) eine besagte vorbestimmte Schwelle durchläuft.

19. Säule zur Messung von Dimensionen gemäss einem der Ansprüche 15 bis 18, worin ein akustisches und/oder visuelles Signal beim besagten Messmoduswechsel gesendet wird.

20. Messsäule gemäss einem der Ansprüche 15 bis 19, worin der besagte Steuerungsdrehknopf (8) mindestens eine Feder (83, 85) umfasst, um den besagten Steuerungsdrehknopf (8) in eine vorbestimmte Ruheposition zurückzuführen.

21. Messsäule gemäss Anspruch 20, worin der besagte Steuerungsdrehknopf (8) mindestens zwei Federn (83, 85) umfasst, um den besagten Steuerungsdrehknopf (8) in eine vorbestimmte Ruheposition zurückzuführen mit einem ersten Moment, wenn die Winkelposition des besagten Steuerungsdrehknopfs sich in einem ersten Intervall um die besagte Ruheposition befindet, und mit einem zweiten, grösseren Moment, wenn die Winkelposition des besagten Steuerungsdrehknopfs sich in einem zweiten Intervall um die besagte Ruheposition befindet.

22. Messsäule gemäss Anspruch 21, worin der besagte Steuerungsdrehknopf (8) umfasst:
ein Rad (80), dazu bestimmt, von der Bedienungsperson gegriffen zu werden,
ein Zwischenantriebsstück (82),
eine erste Feder (83), um das besagte Rad (80) in eine vorbestimmte Position in Bezug auf das besagte Zwischenantriebsstück (82) zurückzuführen,
und eine zweite Feder (85), um das besagte Zwischenantriebsstück (82) in eine Ruheposition in Bezug auf die besagte Messsäule (1) zurückzuführen,
wobei die Momente der besagten Feder sich von einander unterscheiden.

23. Messsäule gemäss einem der Ansprüche 20 bis 22, worin die besagte mindestens eine Feder (83, 85) erlaubt, den Steuerungsdrehknopf (8) in die besagte Ruheposition zurückzuführen, unabhängig von der Richtung, in welche er geschwenkt wurde.

24. Messsäule gemäss einem der Ansprüche 15 bis 23, worin die Winkelposition des Steuerungsdrehknopfs (8) zwischen den vorbestimmten Schwellen die Verschiebungsgeschwindigkeit des besagten Tasters (44) bestimmt.

25. Säule zur Messung von Dimensionen (1) gemäss einem der Ansprüche 15 bis 24, **dadurch gekennzeichnet, dass** der besagte Steuerungsdrehknopf (8) erlaubt, die Messsäule in einen Modus der automatischen Verschiebung des Tasters zu versetzen, wenn das Rad (80) des Befehlknopfs eine vorbestimmte Winkelposition überschreitet.

26. Messsäule gemäss Anspruch 25, worin der besagte Taster (44) sich im automatischen Verschiebungsmodus automatisch verschiebt, bis er mit dem zu messenden Stück (9) in Kontakt kommt, und dann die Messung des Kontaktpunkts anzeigt.

27. Messsäule gemäss Anspruch 26, worin die Verschiebungsgeschwindigkeit des besagten Tasters im besagten automatischen Verschiebungsmodus von der Winkelposition abhängt, die vom besagten Steuerungsdrehknopf erreicht wird.

28. Messsäule gemäss einem der Ansprüche 25 bis 27, worin die Richtung der automatischen Verschiebung von der Winkelposition des besagten Steuerungsdrehknopfs in Bezug auf die besagte Ruheposition abhängt.

29. Messsäule gemäss einem der Ansprüche 15 bis 28, worin der besagte Moduswechselbefehl erlaubt, die besagte Säule (1) in einen Suchmodus des Wendepunkts des zu messenden Stücks (9) zu versetzen.

30. Messsäule gemäss einem der Ansprüche 15 bis 29, wobei ein anderer Moduswechselbefehl eingegeben wird, wenn der besagte Steuerungsdrehknopf (8) zwei Mal die gleiche vorbestimmte Schwelle während einer Zeitspanne vorbestimmter Dauer durchläuft.

31. Messsäule gemäss Anspruch 30, worin der besagte Moduswechselbefehl erlaubt, die besagte Säule (1) in einen Suchmodus des Wendepunkts des zu messenden Stücks (9) zu versetzen, wenn der besagte Steuerungsdrehknopf (8) zwei Mal die gleiche vorbestimmte Schwelle während einer Zeitspanne vorbestimmter Dauer durchläuft.

32. Messsäule gemäss einem der Ansprüche 15 bis 31, wobei der durch Durchlaufen einer der besagten vorbestimmten Schwellen gewählte Messmodus durch ein Computerprogramm bestimmt wird.

33. Messsäule gemäss einem der Ansprüche 15 bis 32, mit einem Potentiometer (86) und einer elektrischen Schaltung zum Bestimmen der Winkelposition des besagten Steuerungsdrehknopfs (8), wobei ein Computerprogramm die Ausführung des besagten Moduswechselbefehls gemäss dem von der besagten elektrischen Schaltung gelieferten Signal erlaubt.
